Europäisches Patentamt

European Patent Office

Office européen des brevets

(11) Veröffentlichungsnummer: **0 275 418**
**A1**

## (12) EUROPÄISCHE PATENTANMELDUNG

(21) Anmeldenummer: 87117644.2

(22) Anmeldetag: 28.11.87

(51) Int. Cl.4 **E05D 13/00 , E06B 9/209**

(30) Priorität: 05.12.86 DE 3641654

(43) Veröffentlichungstag der Anmeldung:
27.07.88 Patentblatt 88/30

(34) Benannte Vertragsstaaten:
AT BE CH DE FR GB IT LI NL

(71) Anmelder: GfA-Antriebstechnik GmbH
Wiesenstrasse 81 Postfach 19 03 60
D-4000 Düsseldorf 11(DE)

(72) Erfinder: Lehmann, Siegfried
Am Kreuzgarten 14
D-4054 Nettetal(DE)

(74) Vertreter: Patentanwälte Dipl.-Ing. Alex
Stenger Dipl.-Ing. Wolfram Watzke Dipl.-Ing.
Heinz J. Ring
Kaiser-Friedrich-Ring 70
D-4000 Düsseldorf 11(DE)

(54) Betätigungsvorrichtung.

(57) Gegenstand der Erfindung ist eine Betätigungsvorrichtung für Fenster, Türen, Tore, Gitter, Aufzüge o. dgl. mit einer Hohlwelle (3) mit zwei drehfest mit dieser verbundenen Schneckenrädern (Arbeitsschneckenrad (4), Sicherheitsschneckenrad (4')), mit einer Antriebswelle (6) mit einer Arbeitsschnecke (8), die mit dem Arbeitsschneckenrad (4) der Hohlwelle (3) kämmt und diese antreibt, mit einer begrenzt axial verschiebbar angeordneten Sicherheitswelle (10) mit einer Sicherheitsschnecke (13), die mit dem Sicherheitsschneckenrad (4') der Hohlwelle (3) kämmt, wobei die Sicherheitswelle (10) im Normalbetrieb von der Antriebswelle (6) angetrieben wird und leer mitläuft und im Störfall als selbsthemmende Sperr-und Fangvorrichtung wirkt, sowie mit einem feststehenden Gehäuse (1), in dem die Wellen (3), (6), (10) gelagert sind. Um einen Nachlauf des Schneckengetriebes weitgehend konstant und lastunabhängig zu machen, wird eine die innere Reibung der Betätigungsvorrichtung erhöhende Einrichtung vorgeschlagen, die eine gespannte Schraubendruckfeder (15) auf der Sicherheitswelle (10) ist, die zwischen einer Anschlagfläche auf der Sicherheitswelle (10) und dem Gehäuse (1) abgestützt ist.

Fig.1

## Betätigungsvorrichtung

Gegenstand der Erfindung ist eine Betätigungsvorrichtung für Fenster, Türen, Tore, Gitter, Aufzüge o.dgl., mit einer Hohlwelle mit zwei drehfest mit dieser verbundenen Schneckenrädern (Arbeitsschneckenrad, Sicherheitsschneckenrad), mit einer Antriebswelle mit einer Arbeitsschnecke, die mit dem Arbeitsschneckenrad der Hohlwelle kämmt und diese antreibt, mit einer begrenzt axial verschiebbar angeordneten Sicherheitswelle mit einer Sicherheitsschnecke, die mit dem Sicherheitsschneckenrad der Hohlwelle kämmt, wobei die Sicherheitswelle im Normalbetrieb von der Antriebswelle angetrieben wird und leer mitläuft und im Störfall als selbsthemmende Sperr-und Fangvorrichtung wirkt, sowie mit einem feststehenden Gehäuse, in dem die Wellen gelagert sind.

Eine selbsttätig wirkende Sperrvorrichtung zum Verhindern eines ungewollten Abrollens eines Rolltores, Rollgitters, Rolladens dieser Art ist aus der DE-PS 22 22 503 bekannt. Sie besteht aus drei Wellen, die in einem feststehenden Gehäuse gelagert sind und jeweils mit einem drehfesten Schneckenrad versehen sind, die insgesamt ein Schneckengetriebe bilden. Zunächst besteht das Getriebe aus einer Hohlwelle, auf der zwei Schneckenräder drehfest angeordnet sind und die zum Auf-und Abwickeln beispielsweise eines Rolltores dient. Weiterhin besteht das Getriebe aus einer Antriebswelle mit einer Arbeitsschnecke, die mit dem Arbeitsschneckenrad der Hohlwelle kämmt und somit diese in der einen oder in der anderen Drehrichtung antreibt. Schließlich weist das bekannte Getriebe eine Sicherheitswelle auf, die in dem Gehäuse begrenzt axial verschiebbar ist und eine Sicherheitsschnecke auf weist. Diese kämmt mit dem Sicherheitsschneckenrad der Hohlwelle. Im Normalbetrieb treibt die Antriebswelle sowohl die Hohlwelle als auch die Sicherheitswelle mit der Sicherheitsschnecke an, wobei letztere ohne Kraftübertragung leer mitläuft. Bei einem Versagen des Arbeitsschneckentriebes kommt die Sicherheitswelle mit ihrer Sicherheitsschnecke unter Last, wobei gleichzeitig durch die axiale Verschiebbarkeit der Sicherheitswelle und/oder durch eine vorgegebene Sollbruchstelle die Weiterleitung des Antriebsmomentes von der Antriebswelle auf die Sicherheitswelle unterbrochen wird. Dadurch bleibt die Last durch die Selbsthemmung zwischen der Sicherheitswelle mit ihrer Sicherheitschnecke und dem Sicherheitsschneckenrad stehen.

Bei diesem bekannten Doppelschneckengetriebe ist bei konstanter Belastung auch der Nachlauf beim Abstoppen konstant. Dieser Nachlauf ändert sich jedoch dann, wenn sich die Belastung ändert. Dies ist beim Auf-und Abwickeln beispielsweise eines Rolltores der Fall, wo sich die Belastung über den Gesamtweg verändert. Auf diese Weise kann sich der Nachlauf im Bereich von einigen Zentimetern verändern. Dies spielt zwar in den Endstellungen keine Rolle, bei einem Anhalten zwischen diesen Endstellungen kann jedoch der Nachlauf unterschiedlich groß sein.

Aus dem DE-GM 76 38 490 ist ein Schneckengetriebe für den Antrieb von Rolladen, Jalousien, Markisen oder ähnlichen Vorrichtungen bekannt. Das bekannte Schneckengetriebe weist eine in einem Gehäuse gelagerte Antriebswelle auf, die mittels eines Motors angetrieben wird und auf der im Inneren des Gehäuses eine Schnecke fest angeordnet ist. Diese Schnecke kämmt mit einem Schneckenrad, das fest auf einer Abriebswelle angeordnet ist. Um die Schnecke der Antriebswelle mit einem geringeren Durchmesser ausbilden zu können, ohne daß dadurch die Selbsthemmung bzw. Selbstsperrung des Schneckengetriebes da unter leidet, besitzt das bekannte Schneckengetriebe eine Zusatzbremseinrichtung. Zu diesem Zweck sind auf die Antriebswelle Bremsscheiben aufgesteckt, wobei zwischen der entsprechenden Bremsscheibe und dem Gehäuse des Schneckengetriebes jeweils zwei Federn angeordnet sind, die am Gehäuse sich abstützend die Bremsscheiben gegen die Stirnflächen der Schnecke drücken und aufgrund des Federdruckes eine hinreichende Bremswirkung ausüben.

Aus der DE-PS 34 03 561 ist ein Schwenkantrieb mit einem selbsthemmenden Schneckengetriebe bekannt, mit dem beispielsweise ein Tor verschwenkt werden kann. Das Schneckengetriebe dieses bekannten Schwenkantriebes weist eine auf einer Schneckenwelle fest angeordnete Schnecke auf, wobei die Schneckenwelle mittels eines Motors in eine Drehbewegung versetzt werden kann und axial schwimmend in einem Gehäuse gelagert ist. Für die axial schwimmende Lagerung der Schneckenwelle ist beidseitig der Schnecke auf der Schneckenwelle jeweils ein Federpaket angeordnet, das sich einerseits am Gehäuse und andererseits an der Stirnseite der Schnecke abstützt. Diese axial schwimmende Lagerung der Schneckenwelle hat den Zweck, daß bei Auftreten eines Hindernisses die von dem Motor angetriebene Schneckenwelle der mit einem Schneckenrad kämmenden Schnecke gegen die Kraft der Federpakete derart axial verschoben wird, daß durch entsprechende Nocken der Schneckenwelle Schalter betätigt werden, die den Antrieb abstellen.

Ausgehend von einer Betätigungsvorrichtung der eingangs angegebenen Art liegt der Erfindung die **Aufgabe** zugrunde, bei der bekannten Betätigungsvorrichtung den Nachlauf weitgehend konstant und lastunabhängig zu machen.

Als technische **Lösung** wird mit der Erfindung eine die innere Reibung der Betätigungsvorrichtung erhöhende Einrichtung vorgeschlagen, wobei diese Einrichtung eine vorgespannte Schraubendruckfeder auf der Sicherheitswelle ist, die zwischen einer Anschlagfläche auf der Sicherheitswelle und dem Gehäuse abgestützt ist.

Diese Zusatzeinrichtung im Schneckengetriebe bei einer gattungsgemäßen Betätigungsvorrichtung erzeugt eine Dauerreibung, die den Nachlauf beseitigt oder zumindest unabhängig von der Belastung konstant hält, so daß dies bei der Steuerung der Betätigungsvorrichtung von vornherein berücksichtigt werden kann. Diese erweist sich insbesondere beim Abstoppen zwischen den Endstellungen nach Vorteil, wo ein möglicher Nachlauf immer kleiner sein muß als beispielsweise der Deformationsweg einer Schließkantensicherung. Die gespannte Schraubendruckfeder der Einrichtung, die einerseits am Gehäuse und andererseits an der Sicherheitswelle abgestützt ist, stellt eine technisch einfache Möglichkeit dar, um eine innere Reibung im Schneckengetriebe zu erzeugen. Die Schraubendruckfeder erzeugt ständig einen gleichmäßigen Druck und somit eine konstante innere Reibung, wobei durch unterschiedliche Federcharakteristiken unterschiedliche Reibungswerte erzielt werden können, so daß unter Umständen der Nachlauf ganz ausgeschaltet werden kann. Da eine derartige Schraubendruckfeder, wenn sie unterhalb der zulässigen Dauerbelastung gespannt ist, eine praktisch unendliche Lebensdauer hat, erfüllt sie jederzeit innerhalb der Lebensdauer des Schneckengetriebes ihre Funktion.

Vorzugsweise ist die eine Stirnwandseite der Sicherheitsschnecke auf der Sicherheitswelle die Anschlagfläche für die Schraubendruckfeder. Auf diese Weise ist eine konstruktiv sehr einfache Anordnung der Schraubendruckfeder geschaffen, die sich zwischen dem Gehäuse und der Sicherheitsschnecke abstützt. Insbesondere wird durch eine derartige Anordnung kein zusätzlicher Platz innerhalb des Getriebes beansprucht.

Weiterhin wird mit der Erfindung vorgeschlagen, daß zwischen der Schraubendruckfeder und sowohl der Anschlagfläche an der Sicherheitswelle als auch dem Gehäuse jeweils eine Scheibe angeordnet ist. Durch diese Scheiben, die die Funktion einer Unterlegscheibe erfüllen, sind die Abstützflächen der beiden Stirnseiten der Schraubendruckfeder definiert. Weiterhin kann durch eine entsprechende Materialauswahl der Scheiben der Verschleiß so gering wie möglich gehalten werden, wobei insbesondere Verschleißspuren am Gehäuse und an der Sicherheitsschnecke vermieden werden.

Schließlich wird mit der Erfindung vorgeschlagen, daß die Schraubendruckfeder nur in einer Drehrichtung beispielsweise mittels eines Freilaufs wirksam ist. Dies hat den Vorteil, daß durch die Wirksamkeit der Schraubendruckfeder nur in einer Drehrichtung der Nachlauf nur in der einen Bewegungsrichtung vermindert werden soll, während in der anderen Richtung die Betätigungsvorrichtung ohne Nachlaufunterdrückung und damit ohne zusätzliche innere Reibung gefahren wird, so daß hier ein geringerer Kraftaufwand benötigt wird. Zudem wird der Verschleiß der Schraubendruckfedereinrichtung verringert. Die einseitige Wirksamkeit der Schraubendruckfeder kann durch bekannte Bauelemente beispielsweise mittels eines Freilaufs erzielt werden. Stattdessen können auch Kurvenstücke verwendet werden, die in Verbindung mit der Massenträgheit wirken.

Weitere Einzelheiten und Vorteile ergeben sich aus der nachfolgenden Beschreibung der zugehörigen Zeichnungen, in denen eine praktische Ausführungsform einer Betätigungsvorrichtung in Schnitten schematisch dargestellt ist. In den Zeichnungen zeigen:

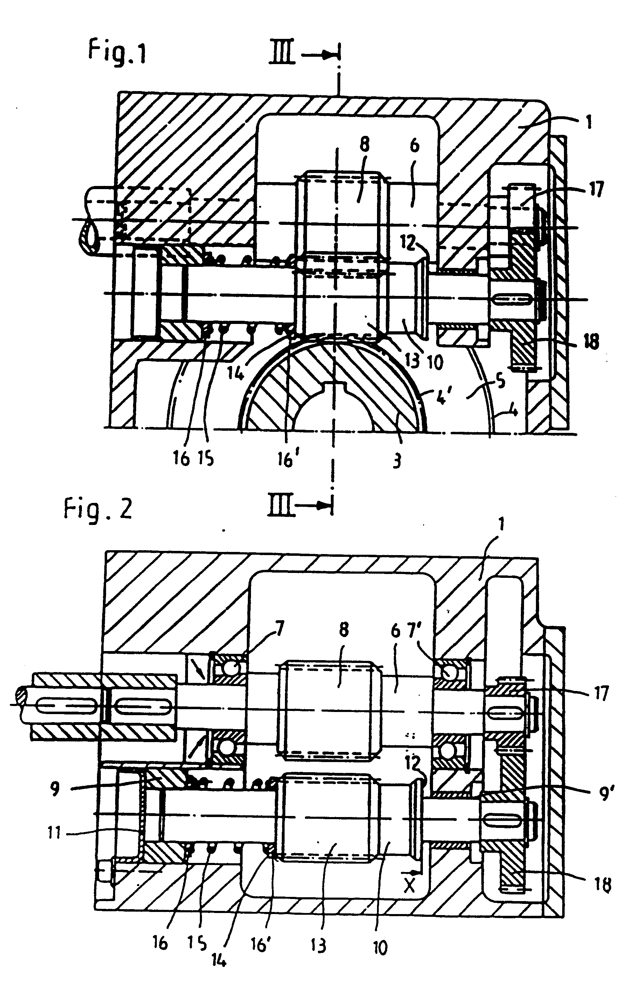

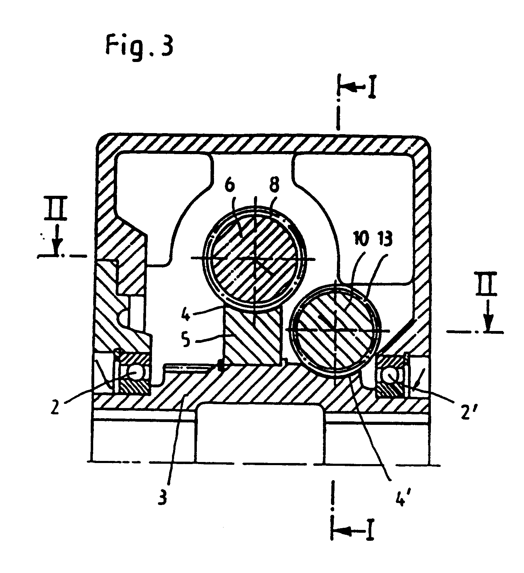

Fig. 1 die Betätigungsvorrichtung mit Blick in Achsrichtung der Hohlwelle entlang der Linie I - I in Fig. 3 geschnitten;

Fig. 2 dieselbe Betätigungsvorrichtung entlang der Linie II - II in Fig. 3 geschnitten in einer Ansicht von oben;

Fig. 3 dieselbe Betätigungsvorrichtung entlang der Linie III - III in Fig. 1 geschnitten in einem Längsschnitt.

In einem feststehenden Gehäuse 1 ist mit Wälzlagern 2, 2' eine Hohlwelle 3 gelagert, die zum Auf- und Abwickeln beispielsweise eines Rolltores, Rollgitters, Rolladens oder dgl. dient. Diese Hohlwelle 3 ist mit einem Arbeitsschneckenrad 4 sowie mit einem Sicherheitsschneckenrad 4' drehfest versehen, wobei das Arbeitsschneckenrad 4 auf einem Radkörper 5 angeordnet ist.

Angetrieben wird die Hohlwelle 3 durch eine Antriebswelle 6, die ebenfalls in Wälzlagern 7, 7' gelagert ist und von einem nicht dargestellten Motor angetrieben wird. Im Bereich zwischen den Wälzlagern 7, 7' ist auf der Antriebswelle 6 eine Arbeitsschnecke 8 drehfest mit der Antriebswelle 6 verbunden. Diese Arbeitsschnecke 8 kämmt mit dem Arbeitsschneckenrad 4 der Hohlwelle 3 und treibt diese an. Die Antriebswelle 6 ist in den Wälzlagern 7, 7' axial unverschiebbar angeordnet.

Parallel zur Antriebswelle 6 ist schließlich im Gehäuse 1 in Buchsen 9, 9' eine Sicherheitswelle 10 begrenzt axial verschiebbar gelagert. Der Verschiebeweg der Sicherheitswelle 10 ist auf der einen Seite (in der Zeichnung links) durch einen Begrenzungsflansch 11 und auf der anderen Seite (in der Zeichnung rechts) durch eine Anschlagfläche 12 begrenzt, wobei der Verschiebeweg X zwischen der Anschlagfläche 12 und dem Gehäuse 1 angedeutet ist.

Auf der Sicherheitswelle 10 ist zwischen den beiden Buchsen 9, 9' eine Sicherheitsschnecke 13 drehfest angeordnet, die mit dem Sicherheitsschneckenrad 4' der Hohlwelle 3 kämmt. Zwischen der in der Zeichnung linken Stirnseite 14 der Sicherheitsschnecke 13 und dem Gehäuse 1 bzw. der Buchse 9 ist eine gespannte Schraubendruckfeder 15 abgestützt, wobei jeweils eine Scheibe 16, 16' zwischengelagert ist. Dabei dient die Stirnseite 14 der Sicherheitsschnecke 13 als Anschlagfläche für das rechte Ende der Schraubendruckfeder 15 bzw. der zwischengeschalteten Scheibe 16'. In einem praktischen Ausführungsbeispiel kann die Schraubendruckfeder 15 eine Axialkraft von 8 kp ausüben.

Der Antrieb der Sicherheitswelle 10 erfolgt über Zahnräder 17, 18, wobei das eine Zahnrad 17 auf dem freien Ende der Antriebswelle 6 drehfest angeordnet ist und das andere Zahnrad 18 auf dem ebenfalls freien Ende der Sicherheitswelle 10 angeordnet ist. Eines der beiden Zahnräder 17, 18 besteht dabei aus Kunststoff.

Die Betätigungsvorrichtung funktioniert folgendermaßen:

Im Normalbetrieb treibt die Antriebswelle 6 über ihre Arbeitsschnecke 8 die Hohlwelle 3 an, indem die Arbeitsschnecke 8 mit dem Arbeitsschneckenrad 4 der Hohlwelle 3 kämmt. In diesem Fall treibt das Zahnrad 10 der Antriebswelle 6 die Sicherheitswelle 10 über deren Zahnrad 18 an, wobei das Übersetzungsverhältnis der Zahnräder 17, 18 so gewählt ist, daß die Sicherheitswelle 10 ohne Kraftübertragung mitläuft.

Die Zähne des Arbeitsschneckenrades 4 können im Laufe der Zeit beispielsweise durch normalen Verschleiß dünner werden und schließlich brechen. In einem solchen Fall kommt die mit dem Sicherheitsschneckenrad 4' der Hohlwelle 3 kämmende Sicherheitsschnecke 13 unter Last und verhindert das Abstürzen des aufgewickelten Tores. Zunächst wird die Sicherheitswelle 10 in axialer Richtung um den Verschiebeweg X (in der Zeichnung nach rechts) verschoben. Entsprechend dem Verschiebeweg X kommen auch die Zahnräder 17, 18 außer Eingriff (in der Größenordnung von 50%). Da das eine Zahnrad 17, 18 aus Kunststoff besteht, ist dadurch eine Sollbruchstelle vorgegeben, die aufgrund des Drehmoments des Motors, der die Last über den Stirnradtrieb -Sicherheitsschneckentrieb heben will, zerstört wird. In diesem Fall ist die Sicherheitswelle 10 mit ihrer Sicherheitsschnecke 13 vom Antrieb abgekoppelt und wirkt als selbsthemmende Fangvorrichtung, die die Hohlwelle 3 festhält und ein Abstürzen der Last, beispielsweise eines Tores, verhindert.

Die Schraubendruckfeder 15 dient für den Normalbetrieb und erzeugt eine innere Reibung im Schneckengetriebe, die einen Nachlauf beim Anhalten des Getriebes verhindert oder zumindest von der Belastung unabhängig macht.

Die Pfeile im Bereich der Wälzlager 2, 2' sowie 7, 7' in der Zeichnung weisen auf Dichtstellen hin.

## Bezugszeichenliste

1 Gehäuse
2 Wälzlager
2' Wälzlager
3 Hohlwelle
4 Arbeitsschneckenrad
4' Sicherheitsschneckenrad
5 Radkörper
6 Antriebswelle
7 Wälzlager
7' Wälzlager
8 Arbeitsschnecke
9 Buchse
9' Buchse
10 Sicherheitswelle
11 Begrenzungsflansch
12 Anschlagfläche
13 Sicherheitsschnecke
14 Stirnseite
15 Schraubendruckfeder
16 Scheibe
16' Scheibe
17 Zahnrad
18 Zahnrad
X Verschiebeweg

## Ansprüche

1. Betätigungsvorrichtung für Fenster, Türen, Tore, Gitter, Aufzüge o. dgl., mit einer Hohlwelle (3) mit zwei drehfest mit dieser verbundenen Schneckenrädern (Arbeitsschneckenrad (4), Sicherheitsschneckenrad (4')), mit einer Antriebswelle (6) mit einer Arbeitsschnecke (8), die mit dem Arbeitsschneckenrad (4) der Hohlwelle (3) kämmt und diese antreibt, mit einer begrenzt axial verschiebbar angeordneten Sicherheitswelle (10) mit einer Sicherheitsschnecke (13), die mit dem Sicherheitsschneckenrad (4') der Hohlwelle (3) kämmt, wobei die Sicherheitswelle (10) im Normalbetrieb von der Antriebswelle (6) angetrieben wird und leer mitläuft und im Störfall als selbsthemmende Sperr-und Fangvorrichtung wirkt, sowie mit einem feststehenden Gehäuse (1), in dem die Wellen (3, 6, 10) gelagert sind,

**gekennzeichnet durch**

eine die innere Reibung der Betätigungsvorrichtung erhöhende Einrichtung, wobei diese Einrichtung eine vorgespannte Schraubendruckfeder (15) auf der Sichereheitswelle (10) ist, die zwischen einer Anschlagfläche (14) auf der Sicherheitswelle (10) und dem Gehäuse (1) abgestützt ist.

2. Betätigungsvorrichtung nach Anspruch 1, dadurch gekennzeichnet, daß die eine Stirnseite (14) der Sicherheitsschnecke (13) auf der Sicherheitswelle (10) die Anschlagfläche für die Schraubendruckfeder (15) bildet.

3. Betätigungsvorrichtung nach Anspruch 1 oder 2, dadurch gekennzeichnet, daß zwischen der Schraubendruckfeder (15) und sowohl der Anschlagfläche (14) an der Sicherheitswelle (10) als auch dem Gehäuse (1) jeweils eine Scheibe (16, 16') angeordnet ist.

4. Betätigungsvorrichtung nach einem der Ansprüche 1 bis 3, dadurch gekennzeichnet, daß die Schraubendruckfeder (15) nur in einer Drehrichtung beispielsweise mittels eines Freilaufs wirksam ist.

0 275 418

Fig.1

Fig. 2

28 707 I

Fig.3

28 707 II

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | DE-B-2 222 503 (GfA-ANTRIEBSTECHNIK GmbH) <br> * Figuren 1-3; Spalte 2, Zeile 35 - Spalte 4, Zeile 12 * <br> --- | 1 | E 05 D 13/00 <br> E 06 B 9/209 |
| A,D | DE-C-3 403 561 (RHEIN GETRIEBE GmbH) <br> * Figur; Spalte 2, Zeilen 34-44 * <br> --- | 1,2 | |
| A | EP-A-0 182 968 (GfA-ANTRIEBSTECHNIK GmbH) <br> --- | | |
| A | DE-A-3 129 648 (NEUKIRCHEN GmbH CO.) <br> ----- | | |

**RECHERCHIERTE SACHGEBIETE (Int. Cl.4)**

E 05 D
E 06 B
B 66 D

Der vorliegende Recherchenbericht wurde für alle Patentansprüche erstellt

| Recherchenort | Abschlußdatum der Recherche | Prüfer |
|---|---|---|
| DEN HAAG | 10-03-1988 | SCHEIBLING C.D.A. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
    Dokument

EPO FORM 1503 03.82 (P0403)